# EUROPÄISCHE PATENTANMELDUNG

(11) **EP 3 958 074 A1**
(43) Veröffentlichungstag der Anmeldung: **23.02.2022**
(21) Anmeldenummer: 20191312.6
(22) Anmeldetag: 17.08.2020
(51) Int. Cl.: G05B 19/4061, B25J 9/16

(54) **KOLLISIONSVERMEIDUNG MIT REAL GEMESSENEN WERKZEUGDATEN**

(71) Anmelder: Siemens Aktiengesellschaft, 80333 München (DE)
(72) Erfinder: Bretschneider, Jochen, 88696 Owingen (DE); Spielmann, Ralf, 70569 Stuttgart (DE)

(57) **Zusammenfassung**

Die Erfindung betrifft ein Verfahren zum Betrieb einer Werkzeugmaschine (20), aufweisend eine numerische Steuerung (30) und mehrere lagegeregelte Achsen zum Erzeugen einer Relativbewegung zwischen einem Werkzeug (1) und einem Werkstück (5), wobei das Werkzeug (1) mittels einer Werkzeugschnittstelle und einem Werkzeughalter (2) und/oder einem Werkzeugadapter (3) und/oder einer Werkzeugverlängerung mit der Werkzeugmaschine (20) verbunden ist,
mit folgenden Schritten:
- Vermessen des Werkzeughalters (2) und/oder des Werkzeugadapters (3) und/oder der Werkzeugverlängerung zum Erzeugen von Geometriedaten des Werkzeughalters (2) und/oder des Werkzeugadapters (3) und/oder der Werkzeugverlängerung;
- Verfügbarmachen der Geometriedaten auf der numerischen Steuerung (30);
- Durchführen einer Bearbeitung des Werkstücks (5) mit dem Werkzeug (1),
wobei während der Bearbeitung des Werkstücks (5) eine Kollisionserkennung zum Erkennen und Verhindern von Kollisionen durchgeführt wird und wobei in die Kollisionserkennung der Werkzeughalter (2) und/oder der Werkzeugadapter (3) und/oder die Werkzeugverlängerung auf Basis der gemessenen Geometriedaten mit einbezogen werden.

## Beschreibung

Die Erfindung betrifft ein Verfahren zum Betrieb einer Werkzeugmaschine, aufweisend eine numerische Steuerung und mehrere lagegeregelte Achsen zum Erzeugen einer Relativbewegung zwischen einem Werkzeug und einem Werkstück, wobei das Werkzeug mittels einer Werkzeugschnittstelle und einem Werkzeughalter und/oder einem Werkzeugadapter und/oder einer Werkzeugverlängerung mit der Werkzeugmaschine verbunden ist.

Ferner betrifft die Erfindung eine numerische Steuerung zur Durchführung eines derartigen Verfahrens sowie eine Werkzeugmaschine mit einer derartigen numerischen Steuerung.

Werkzeugmaschinen werden heutzutage mit Hilfe einer Steuereinrichtung, wie z.B. einer CNC-Steuerung, gesteuert. Dabei "steuert" die Steuereinrichtung anhand eines Teileprogramms die Bewegungen von Maschinenelementen und damit die Bewegungen eines Werkzeuges, welches beispielsweise über einen Werkzeughalter mit einer Werkzeugschnittstelle der Maschine verbunden wird, und/oder eines Werkstücks, welches in die Maschine eingebracht wird. Dabei ist dem Fachmann klar, dass es sich bei dem Begriff "steuern" um den üblichen Sprachgebrauch und nicht um "steuern" im Sinne der Regelungstechnik handelt. "Steuern" meint hier vor allem die Lageregelung von Achsen, wohinter sich Regelungsvorgänge (und keine Steuerungsvorgänge) im Sinne der Regelungstechnik verbergen.

Das Teileprogramm setzt sich dabei zumindest überwiegend aus Steuerbefehlen zusammen, die von der Steuereinrichtung eingelesen und interpretiert werden. Entsprechend den Steuerbefehlen steuert die Steuereinrichtung die Bewegungen der Maschinenelemente der Werkzeugmaschine und damit die Relativbewegung zwischen dem Werkzeug und dem Werkstück.

Zur Erstellung eines Teileprogramms werden dabei von einem CAM-System (Computer Aided Manufacturing) vorzugsweise in einem standardisierten Datenformat Bewegungsinformationen über durchzuführende Bewegungen des Werkzeugs und/oder des Werkstücks erzeugt und von einem nachgeschalteten Postprozessor eingelesen. Der Postprozessor erzeugt anhand der vom CAM-System erzeugten Bewegungsinformationen, den Kinematik- und Maschinendaten der Werkzeugmaschine sowie dem Befehlssatz der CNC-Steuerung und dem Befehlssatz der PLC-Steuerung ein für die jeweilige konkrete Werkzeugmaschine, auf der der Bearbeitungsvorgang stattfinden soll, angepasstes Teileprogramm in Form von auf die konkrete Steuereinrichtung der Werkzeugmaschine angepassten Steuerbefehlen. Solchermaßen werden vom Postprozessor die vom CAM-System, vorzugsweise in einem standardisierten Datenformat, erzeugten Bewegungsinformationen in Steuerbefehle, die von der Steuereinrichtung eingelesen werden können und auf die jeweilige Steuereinrichtung angepasst sind, umgesetzt.

Der Postprozessor berücksichtigt dabei neben dem konkret verfügbaren CNC-Befehlssatz die konkreten maschinenspezifischen kinematischen Gegebenheiten der Werkzeugmaschine, wie z.B. Kinematik, geometrische Größenverhältnisse, maximale Verfahrbereiche der Antriebsachsen und Maximalgeschwindigkeiten der Maschinenelemente. Diese Daten liegen in Form von Maschinendaten vor. Weiterhin werden vom Postprozessor bei der Erzeugung der Steuerbefehle maschinenspezifische PLC-Funktionalitäten (Programmable Logic Control), wie z.B. Spindel Start/Stop, Schmierung, Werkzeugwechsel, Türverriegelung etc. berücksichtigt, wobei die konkret verfügbaren PLC-Funktionalitäten in Form von PLC-Befehlssätzen dem Postprozessor zur Verfügung stehen.

Moderne CNC-Steuerungen verfügen heutzutage über Mittel zur Kollisionserkennung bzw.-vermeidung. Während des Betriebs der Maschine werden zukünftige Lagesollwerte der Maschinenachsen ermittelt und analysiert und auf Basis der Analyse vorausschauend erkannt, ob Teile der Maschine möglicherweise kollidieren. Im Fall einer erkannten Kollision werden sofort alle relevanten, zumeist die interpolierenden, Maschinenachsen gestoppt, um eine reale Kollision zu vermeiden.

Auch Werkzeuge und deren Halter (Werkzeughalter) sollen in Werkzeugmaschinen vor Kollision mit anderen Bauteilen geschützt werden. Deshalb gehen die Werkzeugabmessungen ebenso wie die Abmessungen des Werkzeughalters idealerweise in die Kollisionserkennung bzw. -vermeidung der Werkzeugmaschine mit ein. Denn auch die Kollision des Werkzeughalter gegen das zu bearbeitende Bauteil bzw. des Werkzeughalters gegen ein Werkzeugmaschinenbauteil erzeugt einen nicht unerheblichen Schaden. Auch die Überwachung des Werkzeugs selbst zur Kollisionsvermeidung zwischen dem Werkzeug und einem Werkzeugmaschinenbauteil soll erfolgen, derart, dass ein direkter Kontakt des Werkzeugs nur mit dem zu bearbeitenden Werkstück zulässig ist.

Aus der EP 2 515 192 A1 ist ein Verfahren zur Vermeidung einer ungewollten Kollision zwischen einem Werkzeug und einem Werkstück bei einer Werkzeugmaschine bekannt, wobei anhand einer Bremsendanordnung des Werkzeugs und eines die geometrische Form des Werkzeugs beschreibenden Werkzeugformmodells ein Werkzeugmodell ermittelt wird und wobei überprüft wird, ob das Werkzeugmodel sich mit einem eine geometrische Form des Werkstücks beschreibenden vorgegebenen Werkstückmodell überschneidet.

Aus der EP 2 919 081 A1 ist ein Betriebsverfahren für eine mit einer numerischen Steuerung verbundene Werkzeugmaschine bekannt, bei dem Maschinenelementen, einem Werkstück und einem Werkzeug innerhalb der numerischen Steuerung virtuelle Schutzkörper zugeordnet sind, wobei die numerische Steuerung vor dem Ansteuern von lagegeregelten Achsen der Werkzeugmaschine Volumina ermittelt, die von den Schutzkörpern bei Ansteuerung der lagegeregelten Achsen gemäß einer Sequenz von Lagesollwerten eingenommen würden, und prüft, ob - soweit erforderlich, mit Ausnahme der durch das Werkzeug am Werkstück vorzunehmenden Bearbeitung - die Schutzkörper hierbei disjunkt voneinander bleiben. Wird bei dieser der realen Bearbeitung vorauseilenden Simulation festgestellt, dass sich Schutzkörper überschneiden, so wird dies als drohende Kollision erkannt und die Werkzeugmaschine rechtzeitig vor einer die realen Maschinenelemente, das reale Werkstück oder das reale Werkzeug betreffenden Kollision angehalten.

Weiterhin ist im Zusammenhang mit Werkzeugmaschinen die Verwendung von Werkzeugmesseinrichtungen bekannt. Mittels einer Werkzeugmesseinrichtung können exakte Geometriedaten des Werkzeugs bestimmt werden, bevor das Werkzeug zur Bearbeitung eines Werkstücks in die Werkzeugmaschine eingebracht und verwendet wird. Die gemessenen Geometriedaten werden zur Werkzeuglängenkorrektur, Werkzeugdurchmesserkorrektur und Werkzeugradiuskorrektur verwendet. Ebenso wird anhand der ermittelten Daten der (Verschleiß-) Zustand des Werkzeuges, insbesondere der Schneiden, bewertet und ein Werkzeug für die Bearbeitung gesperrt oder ggf. für ein Nachschärfen der Schneiden empfohlen. Die gewünschte Bearbeitung des Werkstücks kann damit genauer erfolgen, als es ohne die genannten Korrekturen der Fall wäre.

Nachteilig bei den bekannten Verfahren zum Betrieb von Werkzeugmaschinen ist, dass dabei mittels einer Kollisionserkennungseinrichtung Kollisionen in Verbindung mit einem Werkzeughalter oder einem Werkzeugadapter oder einer Werkzeugverlängerung oft nur unzureichend erkannt werden.

Ferner müssen Geometriedaten von Schutzkörpern, die im Zusammenhang mit der Kollisionserkennung für Werkzeughalter oder Werkzeugadapter oder Werkzeugverlängerungen verwendet werden, bislang oft umständlich in die numerische Steuerung eingegeben werden.

Aufgabe der vorliegenden Erfindung ist es daher, die Kollisionserkennung zu verbessern und zu vereinfachen.

Diese Aufgabe wird gelöst durch ein Verfahren gemäß Patentanspruch 1, also ein Verfahren zum Betrieb einer Werkzeugmaschine, aufweisend eine numerische Steuerung und mehrere lagegeregelte Achsen zum Erzeugen einer Relativbewegung zwischen einem Werkzeug und einem Werkstück, wobei das Werkzeug mittels einer Werkzeugschnittstelle und einem Werkzeughalter und/oder einem Werkzeugadapter und/oder einer Werkzeugverlängerung mit der Werkzeugmaschine verbunden ist,
mit folgenden Schritten:
- Vermessen des Werkzeughalters und/oder des Werkzeugadapters und/oder der Werkzeugverlängerung zum Erzeugen von Geometriedaten des Werkzeughalters und/oder des Werkzeugadapters und/oder der Werkzeugverlängerung;
- Verfügbarmachen der Geometriedaten auf der numerischen Steuerung (30);
- Durchführen einer Bearbeitung des Werkstücks mit dem Werkzeug,
wobei während der Bearbeitung des Werkstücks eine Kollisionserkennung zum Erkennen und Verhindern von Kollisionen durchgeführt wird und wobei in die Kollisionserkennung der Werkzeughalter und/oder der Werkzeugadapter und/oder die Werkzeugverlängerung auf Basis der gemessenen Geometriedaten mit einbezogen werden.

Dabei dient die Werkzeugschnittstelle zur Verbindung des Werkzeugs mit der Werkzeugmaschine. Häufig ist die Werkzeugschnittstelle Teil einer Werkzeugspindel. In der Regel wird das Werkzeug jedoch nicht direkt mit der Werkzeugschnittstelle verbunden, sondern mittels eines dazwischen befindlichen Werkzeughalters, auch Werkzeugaufnahme genannt. Auch der Werkzeughalter wird oft nicht direkt mit der Werkzeugschnittstelle verbunden, sondern mittels eines dazwischen befindlichen Werkzeugadapters. Weiterhin kann sich zwischen der Werkzeugschnittstelle und dem Werkzeug auch eine sogenannte Werkzeugverlängerung befinden. Es besteht daher in der Regel nur eine indirekte Verbindung zwischen dem Werkzeug und der Werkzeugschnittstelle der Maschine.

Die Erfindung bietet den Vorteil, dass durch die Vermessung des Werkzeughalters bzw. des Werkzeugadapters bzw. der Werkzeugverlängerung exakte Geometriedaten dieser Teile vorliegen. Es muss daher nicht auf Daten aus einem CAM-System oder auf Hersteller-Angaben zurückgegriffen werden, die häufig die Abmessungen der konkret in der Maschine vorliegenden Teile nicht korrekt wiedergeben. Auch die Verwendung von ungenauen "Schutzkörpern" im Zusammenhang mit der (vorausschauenden) Kollisionserkennung ist damit hinfällig.

Weiterhin können die gemessenen Geometriedaten in einfacher Weise von einer Messeinrichtung zu der CNC-Steuerung übertragen und dort gespeichert werden. Eine manuelle Eingabe oder eine Suche in Datenbanken wird dadurch vermieden.

Bei einer Ausführungsform der Erfindung werden der Werkzeughalter und/oder der Werkzeugadapter und/oder die Werkzeugverlängerung einzeln vermessen. Die Daten der einzelnen Teile können in einer Datenbank (sowohl auf der Steuerung als auch extern) hinterlegt und darauf später erneut zugegriffen werden.

Bei einer anderen Ausführungsform der Erfindung werden der Werkzeughalter und der Werkzeugadapter und optional die Werkzeugverlängerung in miteinander verbundenem Zustand vermessen. Diese Ausführungsform bietet den Vorteil, dass häufig auch gerade in der Verbindung der genannten Teile Toleranzen entstehen, die so erfasst werden können und bei einer reinen Betrachtung der Einzelteile nicht berücksichtigt werden würden.

Bei einer weiteren Ausführungsform der Erfindung werden das Werkzeug und der Werkzeughalter und optional (sofern vorhanden) der Werkzeugadapter und optional (sofern vorhanden) die Werkzeugverlängerung in miteinander verbundenem Zustand vermessen. Diese Ausführungsform bietet den Vorteil, dass auch das Werkzeug in die Vermessung mit einbezogen ist. So können beispielsweise auch Toleranzen bei der Befestigung des Werkzeugs mit dem Werkzeughalter erkannt werden.

Nachfolgend wird das in die Werkzeugschnittstelle der Werkzeugmaschine eingespannte Teil, welches das Werkzeug und wenigstens ein weiteres Teil (Werkzeughalter, Werkzeugadapter oder Werkzeugverlängerung) umfasst, auch als "Komplettwerkzeug" bezeichnet.

Bei einer Ausführungsform der Erfindung wird im Zusammenhang mit der Kollisionserkennung zwischen einem schneidenden Teil und einem nichtschneidenden Teil des Komplettwerkzeuges unterschieden. Aus Sicht der Kollisionserkennung ist daher über die Werkzeugschnittstelle nur das Komplettwerkzeug mit der Werkzeugmaschine verbunden. Bei diesem Komplettwerkzeug wird unterschieden zwischen einem schneidenden Teil (der Schneide des Werkzeugs) und einem nichtschneidenden Teil (dem "Rest"). Der schneidende Teil dient der Bearbeitung des Werkstücks und ist daher nur hinsichtlich Kollisionen mit Teilen der Maschine, der nichtschneidende Teil auch bezüglich Kollisionen mit dem Werkstück zu überprüfen.

Bei einer weiteren Ausführungsform der Erfindung erfolgt die Vermessung des Werkzeugs in der Werkzeugmaschine. Auf eine spezielle Messmaschine kann daher verzichtet werden. Vorzugsweise wird für die Vermessung ein Messtaster in die Spindel der Werkzeugmaschine eingespannt und die zu vermessenden Teile (Werkzeughalter, Werkzeugadapter, Werkzeugverlängerung, Komplettwerkzeug) in der Werkzeugmaschine befestigt. Analog zur Vermessung eines Werkstücks werden dann relevante Punkte der genannten Teile angefahren und erfasst.

Alternativ dazu werden bei einer Ausführungsform der Erfindung die Vermessung in einer bezüglich der Werkzeugmaschine externen Messeinrichtung durchgeführt und die gemessenen Geometriedaten auf die numerische Steuerung übertragen. In einer externen Messeinrichtung gestaltet sich die Vermessung oft einfacher als in der Werkzeugmaschine. Außerdem liefert sie teilweise noch genauere Messergebnisse.

Neben einem bereits genannten Messtaster wird bei einer Ausführungsform der Erfindung zum Vermessen ein Scanner, insbesondere ein Handscanner, verwendet. Scanner basieren oft auf optischen Messverfahren, wie z.B. Laserscanner. In der Regel lässt sich damit eine viel größere Anzahl an Messpunkten erfassen als dies mit einem Messtaster der Fall wäre.

Bei einer Ausführungsform der Erfindung werden die gemessenen Geometriedaten der numerischen Steuerung in Form eines Konturzugs bereitgestellt. In Hinblick auf die Kollisionserkennung ist vor allem die Außenkontur des betrachteten Gebildes, insbesondere des Komplettwerkzeuges, von Interesse. Diese wird durch den Konturzug in einfacher Weise beschrieben.

Die eingangs gestellte Aufgabe wird ferner gelöst durch eine numerische Steuerung zur Durchführung eines Verfahrens nach einem der Ansprüche 1 bis 10.

Die eingangs gestellte Aufgabe wird weiterhin gelöst durch eine Werkzeugmaschine mit einer numerischen Steuerung gemäß Anspruch 11.

Die Erfindung wird nachfolgend anhand von Ausführungsbespielen exemplarisch näher beschrieben und erläutert. Dabei zeigen:
- FIG 1: Eine Werkzeugmaschine zur Durchführung eines erfindungsgemäßen Verfahrens,
- FIG 2: Werkzeug, Werkzeughalter und Werkzeugadapter - einzeln und zusammen als ein Teil,
- FIG 3: Vermessen eines Werkzeughalters mittels eines Messtasters in der Werkzeugmaschine,
- FIG 4: Vermessen von Werkzeug, Werkzeughalter und Werkzeugadapter als einstückiges Teil mittels eines externen Scanners,
- FIG 5: Verfahrensschritte bei der Durchführung eines erfindungsgemäßen Verfahrens.

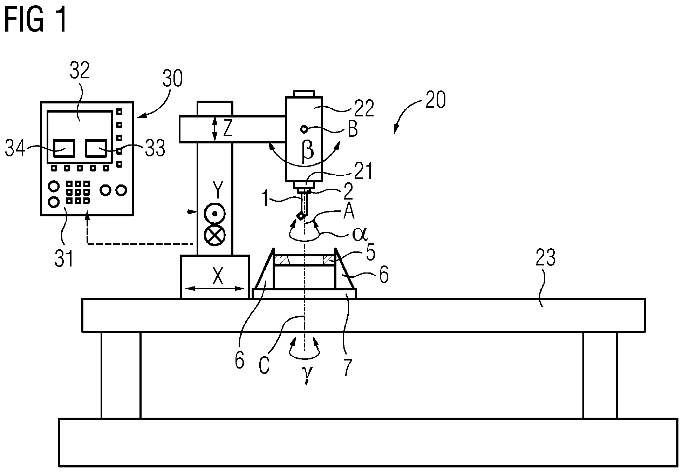

In FIG 1 ist schematisiert eine Werkzeugmaschine 20 dargestellt. Die Werkzeugmaschine 20 verfügt im Rahmen des Ausführungsbeispiels über sechs Maschinenachsen, durch die eine Relativbewegung zwischen einem Werkzeug 1, das im Rahmen des Ausführungsbeispiels in Form eines Drehmeißels 1 vorliegt, und einem Werkstück 5, im Ausführungsbeispiel angedeutet als Ventilsitz eines Absperrventils, durchgeführt werden kann. Das Werkzeug 1 ist dabei in einen Werkzeughalter 2 eingespannt, der über eine Werkzeugschnittstelle (nicht dargestellt) mit einer Werkzeugspindel 21 verbunden ist, die von einem lagegeregelten Motor 22 angetrieben wird. Das Werkstück 5 ist durch Spannmittel 6 an einem Werkstücktisch 7 befestigt.

Der Drehmeißel 1 lässt sich mit der im Ausführungsbeispiel gezeigten Maschine 20 mit der Übersichtlichkeit halber in FIG 1 nicht dargestellten Antrieben in X-, Y- und Z-Richtung lagegeregelt translatorisch bewegen. Neben den drei Linearachsen umfasst die gezeigte Werkzeugmaschine 20 ferner die beiden, ebenfalls aus FIG 1 ersichtlichen lagegeregelten Rundachsen A (Spindelachse) und B, mit denen das Werkzeug 1 um die jeweilige Achse gedreht und ebenfalls lagegeregelt durch die Winkellagen α und β relativ zu dem Werkstück 5 ausgerichtet werden kann.

Darüber hinaus verfügt die Maschine 20 über eine dritte lagegeregelte Rundachse C, die parallel zur Z-Achse verläuft, und bezüglich der der Werkstücktisch 7 relativ zu einem ruhenden Maschinengestell 23 drehbar gelagert ist. Dadurch kann das Werkstück 5 auch in einer Winkellage γ relativ zu dem Werkzeug 1 positioniert werden. Auch hier wurde der Übersichtlichkeit halber auf eine Darstellung des Antriebs verzichtet.

Abhängig von der durchzuführenden Bearbeitung ist bei der gezeigten Werkzeugmaschine 20 auch ein drehzahlgeregelter Betrieb bezüglich der Rundachsen A und/oder C möglich.

Die Werkzeugmaschine 20 gemäß dem Ausführungsbeispiel weist somit sechs Maschinenachsen (die 3 Linearachsen X, Y und Z sowie die 3 Rundachsen A, B und C) auf, d.h. es handelt sich um eine sogenannte 6-achsige Werkzeugmaschine (6-Achs-Maschine) 20.

Es sei an dieser Stelle angemerkt, dass die Werkzeugmaschine 20 selbstverständlich auch noch mehr, aber auch weniger als sechs Maschinenachsen aufweisen kann.

Die Werkzeugmaschine 20 ist mit einer numerischen Steuerung 30 verbunden, die anhand eines Teileprogramms 33 und/oder einer Handbedieneingabe Lagesollwerte x, y, z, α, β und γ zur Steuerung einer zwischen dem Werkzeug 1 und dem Werkstück 5 stattfindenden Relativbewegung ermittelt. Die numerische Steuerung 30 ermittelt die Lagesollwerte anhand des Teileprogramms 33, in dem die vom Werkzeug 1 und/oder Werkstück 5 durchzuführende Bewegung in Form von Befehlen definiert ist. Alternativ oder zusätzlich kann die Bewegung des Werkzeugs 1 und/oder das Werkstücks 5 auch mittels einer Handbedieneingabe über eine Bedieneinrichtung 31 in Verbindung mit einer Anzeigevorrichtung 32 der numerischen Steuerung 30 von einem Bediener vor Ort an der Werkzeugmaschine 20 vorgegeben werden. Die Bedieneinrichtung 31 weist hierzu insbesondere Eingabefelder, Tasten und Drehregler auf.

Das Teileprogramm 33 wird dabei üblicherweise von einem externen CAM/CAD-System (nicht dargestellt) und einem eventuell dem CAM/CAD-System nachgeschalteten sogenannten Postprozessor (nicht dargestellt) außerhalb der numerischen Steuerung 30 erzeugt und von dort auf die numerische Steuerung 30 übertragen.

Bei der Abarbeitung des Teileprogramms 33 erzeugt die numerische Steuerung 30 in einem bestimmten Takt, dem Interpolationstakt, sowohl Lagesollwerte x, y und z für die Linearachsen als auch α, β und γ (Winkellagen) für die Rundachsen. Durch diese Lagesollwerte wird das Werkzeug 1 mit vorgegebener Orientierung relativ zu dem Werkstück 5 entlang einer Bewegungsbahn bewegt.

Die Numerische Steuerung 30 gemäß der Erfindung umfasst ferner eine (interne) Kollisionserkennungseinrichtung 34, die insbesondere in Form einer in an sich bekannter Weise realisierten Software ausgebildet ist. Mittels der Kollisionserkennungseinrichtung 34 werden Bewegungen von beweglichen Teilen der Werkzeugmaschine 20, dem Werkzeug 1 sowie dem Werkstück 5 vorausberechnet und drohende Kollisionen rechtzeitig erkannt und dadurch Kollisionen bei der realen Werkzeugmaschine 20 verhindert. Dazu werden der Kollisionserkennungseinrichtung 34 die Bewegungssollwerte x, y, z, α, β und γ zugeführt, aus denen die Kollisionserkennungseinrichtung 34 zu erwartende, zukünftige Bewegungssollwerte x', y', z' α', β' und γ' ermittelt. Die zukünftigen Bewegungswerte werden dabei im Rahmen des Ausführungsbeispiels durch Extrapolation aus den aktuell von der numerischen Steuerung 30 erzeugten Bewegungssollwerten x, y, z, α, β und γ und aus weiter in der Vergangenheit liegenden Bewegungssollwerten ermittelt. So kann z.B. aus den aktuellen Bewegungssollwerten x, y, z, α, β und γ und den in der Vergangenheit liegenden Bewegungssollwerten die Geschwindigkeit des Werkzeugs 1 in jeder Richtung berechnet werden und anhand dieser Geschwindigkeit eine zu erwartende zukünftige Lage des Werkzeugs 1 ermittelt werden. Vorzugsweise werden dabei die Bewegungssollwerte nur um wenige Interpolationstakte der numerischen Steuerung 30, d.h. in der Regel nur um wenige Millisekunden in die Zukunft vorausberechnet. Die zu erwartenden zukünftigen Bewegungssollwerte stimmen somit sehr genau mit den tatsächlichen zukünftigen Bewegungssollwerten überein.

Darüber hinaus können die zukünftigen Bewegungssollwerte - zusätzlich oder alternativ - auch auf Basis des Teileprogramms bestimmt werden. Dazu werden der Kollisionserkennungseinrichtung 34 zukünftig zur Abarbeitung kommende Steuerbefehle des Teileprogramms zugeführt, aus denen die Kollisionserkennungseinrichtung 34 die zu erwartenden, zukünftigen Bewegungssollwerte x', y', z' α', β' und γ' der Maschinenachsen ermittelt.

Weiterhin sind in der Kollisionserkennungseinrichtung 34 die Geometrie des Werkzeugs 1, des Werkzeughalters 2, des Werkstücks 5, der Spannmittel 6 sowie von in Bezug auf Kollisionen relevanter Maschinenteile betreffende Daten hinterlegt, aus denen die Kollisionserkennungseinrichtung 34 ein Werkzeugmodell, ein Werkzeughaltermodell, ein Werkstückmodell sowie ein Maschinenmodell generiert. Ferner bestimmt die Kollisionserkennungseinrichtung aus den Bewegungssollwerten die Position und Orientierung der einzelnen Modelle.

Die Kollisionserkennungseinrichtung 34 erkennt insbesondere dann eine Kollision, wenn es bei den Modellen in ihren durch die ermittelten, zukünftigen Bewegungssollwerte x', y', z', α', β' und γ' vorbestimmten Positionen zu einer Überschneidung kommt.

Wenn die Kollisionserkennungseinrichtung 34 feststellt, dass sich zwei (oder mehrere) der genannten Modelle bei den ermittelten zukünftigen Bewegungssollwerten überschneiden, so bewirkt sie ein Abbremsen der Relativbewegung zwischen Werkzeug 1 und Werkstück 5 bis zum Stillstand der Relativbewegung.

Die Kollisionserkennung kann nur dann gut funktionieren, wenn der Kollisionserkennungseinrichtung 34 neben der Position auch die genauen geometrischen Abmessungen der hinsichtlich Kollisionen zu überprüfenden Teile bekannt sind.

Die Erfindung betrifft insbesondere die Gewinnung von Geometriedaten eines Werkzeughalters 2 und/oder eines Werkzeugadapters 3 und/oder einer Werkzeugverlängerung und/oder eines Komplettwerkzeuges, die in die Kollisionserkennung mit einbezogen werden.

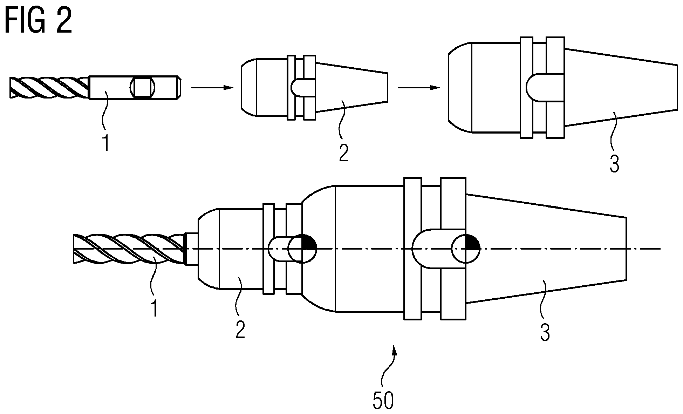

FIG 2 zeigt ein Werkzeug 1, einen Werkzeughalter 2 und einen Werkzeugadapter 3, sowohl einzeln (obere Hälfte der Figur) als auch im miteinander verbundenen Zustand, d.h. zusammen als ein Teil, auch als "Komplettwerkzeug" 50 bezeichnet (untere Hälfte der Figur). Das Komplettwerkzeug 50 wird mit der Werkzeugspindel, insbesondere einer Werkzeugschnittstelle der Werkzeugspindel lösbar verbunden.

Allgemein setzt sich das Komplettwerkzeug aus dem Werkzeug 1 und wenigstens einem weiteren Teil (Werkzeughalter, Werkzeugadapter oder Werkzeugverlängerung) zusammen. Das aus FIG 2 ersichtliche Komplettwerkzeug 50 ist daher nur eine mögliche Ausführungsform eines Komplettwerkzeuge.

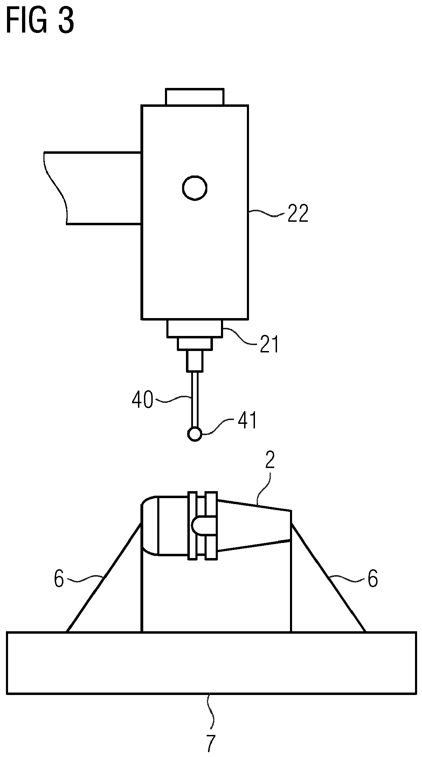

FIG 3 veranschaulicht das Vermessen eines Werkzeughalters 2 mittels eines Messtasters 40 in der Werkzeugmaschine. Es werden dieselben Bezugszeichen wie in FIG 1 verwendet, da es sich prinzipiell um dieselbe Werkzeugmaschine 20 handeln kann.

Anstatt eines üblichen Werkzeugs 1 ist in die Spindel 21 der Werkzeugmaschine 20 ein Messtaster 40 eingespannt. Der Messtaster 40 kann wie ein Werkzeug im Arbeitsraum der Werkzeugmaschine 20 positioniert werden. Weiterhin befindet sich im Arbeitsraum der Werkzeugmaschine 20 ein zu vermessendes "Objekt" - üblicherweise ein Werkstück, welches insbesondere mittels Spannmittel 6 auf einem Werkstücktisch 7 fixiert wird. Der Messtaster 40 reagiert auf jegliche Berührung des Tastkopfes 41 und registriert die genaue Position, bei der die Berührung stattgefunden hat. Dadurch lassen sich im Arbeitsraum der Werkzeugmaschine 20 befindliche Objekte, insbesondere Werkstücke, sehr genau vermessen.

Die durch den Messtaster 40 erfassten Positionen können auf die CNC-Steuerung 30 übertragen und dort gespeichert werden.

Erfindungsgemäß wird nun nicht ein zu vermessendes Werkstück, sondern ein Werkzeughalter 2 oder ein Werkzeugadapter 3 oder eine Werkzeugverlängerung oder ein Komplettwerkzeug im Arbeitsraum der Werkzeugmaschine 20 befestigt, im Ausführungsbeispiel der Werkzeughalter 2, und mittels des Messtasters 40 in an sich bekannter Weise vermessen. Nach Abschluss der Vermessung liegen die Geometriedaten des Werkzeughalters 2, oder alternativ eines Werkzeugadapters oder einer Werkzeugverlängerung in der CNC-Steuerung 30 vor und können dort von der Kollisionserkennungseinrichtung 34 verwendet werden.

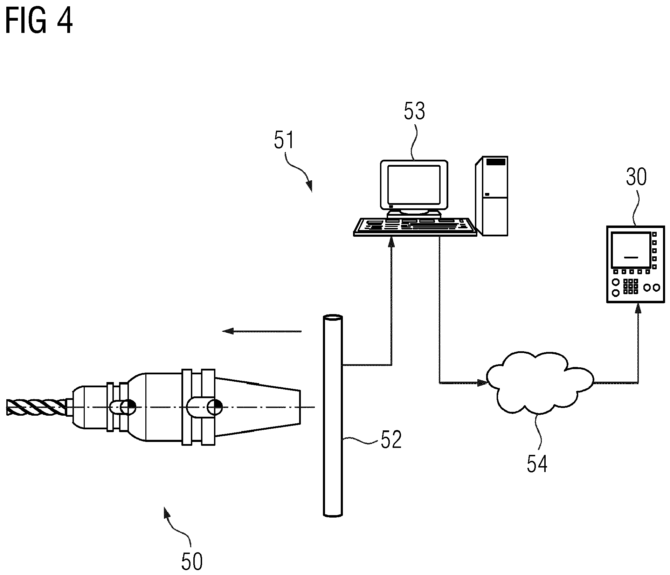

FIG 4 veranschaulicht das Vermessen von Werkzeug, Werkzeughalter und Werkzeugadapter als einstückiges, zusammengesetztes Komplettwerkzeug 50 mittels eines externen Scanners 51. Der verwendete Scanner 51 umfasst eine optische Abtasteinheit 52 zur berührungslosen Abtastung des genannten Teils 50 und ist insbesondere als Laserscanner ausgeführt.

Der Scanner 51 umfasst ferner eine Recheneinrichtung 53 zum Erfassen der Sensordaten und zum Bestimmen der Geometriedaten des zu vermessenden Objekts, im Ausführungsbeispiel des Komplettwerkzeuges 50.

Die Recheneinrichtung 53 ist über ein Netzwerk 54 mit der numerischen Steuerung 30 verbunden. Über diese Verbindung werden die ermittelten Geometriedaten von dem Scanner 51 auf die Steuerung 30 übertragen.

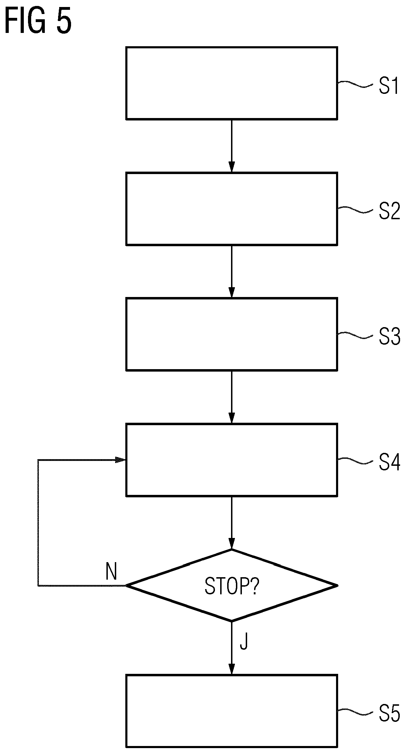

Nachfolgend werden die wesentlichen Verfahrensschritte bei der Durchführung eines erfindungsgemäßen Verfahrens nochmals in Form eines Ablaufdiagramms gemäß FIG 5 verdeutlicht.

In einem ersten Verfahrensschritt S1 werden eine Werkzeugmaschine mit einer numerischen Steuerung und einer Kollisionserkennungseinrichtung bereitgestellt.

In einem zweiten Verfahrensschritt S2 werden der Werkzeughalter und/oder der Werkzeugadapter und/oder die Werkzeugverlängerung und/oder das Komplettwerkzeug vermessen und Geometriedaten des Werkzeughalters und/oder des Werkzeugadapters und/oder der Werkzeugverlängerung und/oder des Komplettwerkzeuges erzeugt.

Vorteilhaft werden alle Werkzeughalter und/oder der Werkzeugadapter und/oder die Werkzeugverlängerungen und/oder das Komplettwerkzeuge vermessen, die bei der Bearbeitung eines bestimmten Werkstücks mit einem bestimmten Teileprogramm benötigt werden. Vorzugsweise erfolgt die Vermessung unmittelbar vor Beginn der Ausführung des Teileprogramms mit den in der Maschine vorhandenen Werkzeugen, Werkzeugadaptern und Werkzeugverlängerungen.

In einem dritten Verfahrensschritt S3 werden die gemessenen Geometriedaten auf der numerischen Steuerung übertragen und der Kollisionserkennungseinrichtung zur Verfügung gestellt.

In einem dritten Verfahrensschritt S4 wird eine Bearbeitung des Werkstücks mit dem Werkzeug durchgeführt, wobei während der Bearbeitung des Werkstücks eine Kollisionserkennung zum Erkennen und Verhindern von Kollisionen durchgeführt wird und wobei in die Kollisionserkennung der Werkzeughalter und/oder der Werkzeugadapter und/oder die Werkzeugverlängerung und/oder das Komplettwerkzeug auf Basis der gemessenen Geometriedaten mit einbezogen werden.

Die Bearbeitung wird solange fortgesetzt, bis entweder das Teileprogramm abgearbeitet ist oder eine drohende Kollision erkannt wurde.

In einem Verfahrensschritt S5 wird die Bearbeitung beendet und alle Maschinenachsen gestoppt.

## Patentansprüche

1. Verfahren zum Betrieb einer Werkzeugmaschine (20), aufweisend eine numerische Steuerung (30) und mehrere lagegeregelte Achsen zum Erzeugen einer Relativbewegung zwischen einem Werkzeug (1) und einem Werkstück (5), wobei das Werkzeug (1) mittels einer Werkzeugschnittstelle und einem Werkzeughalter (2) und/oder einem Werkzeugadapter (3) und/oder einer Werkzeugverlängerung mit der Werkzeugmaschine (20) verbunden ist, mit folgenden Schritten:
- Vermessen des Werkzeughalters (2) und/oder des Werkzeugadapters (3) und/oder der Werkzeugverlängerung zum Erzeugen von Geometriedaten des Werkzeughalters (2) und/oder des Werkzeugadapters (3) und/oder der Werkzeugverlängerung;
- Verfügbarmachen der Geometriedaten auf der numerischen Steuerung (30);
- Durchführen einer Bearbeitung des Werkstücks (5) mit dem Werkzeug (1),
wobei während der Bearbeitung des Werkstücks (5) eine Kollisionserkennung zum Erkennen und Verhindern von Kollisionen durchgeführt wird und wobei in die Kollisionserkennung der Werkzeughalter (2) und/oder der Werkzeugadapter (3) und/oder die Werkzeugverlängerung auf Basis der gemessenen Geometriedaten mit einbezogen werden.

2. Verfahren nach Anspruch 1, wobei der Werkzeughalter (2) und/oder der Werkzeugadapter (3) und/oder die Werkzeugverlängerung einzeln vermessen werden.

3. Verfahren nach Anspruch 1, wobei der Werkzeughalter (2) und der Werkzeugadapter (3) und optional die Werkzeugverlängerung in miteinander verbundenem Zustand vermessen werden.

4. Verfahren nach Anspruch 1, wobei das Werkzeug (1) und der Werkzeughalter (2) und optional der Werkzeugadapter (3) und optional die Werkzeugverlängerung miteinander verbunden sind und ein Komplettwerkzeug bilden und wobei das Komplettwerkzeug vermessen wird.

5. Verfahren nach Anspruch 4, wobei im Zusammenhang mit der Kollisionserkennung zwischen einem schneidenden Teil und einem nichtschneidenden Teil des Komplettwerkzeuges (50) unterschieden wird.

6. Verfahren nach einem der vorherigen Ansprüche, wobei die Vermessung in der Werkzeugmaschine (20) erfolgt.

7. Verfahren nach einem der Ansprüche 1 bis 5, wobei die Vermessung in einer bezüglich der Werkzeugmaschine (20) externen Messeinrichtung (51) erfolgt und die gemessenen Geometriedaten auf die numerische Steuerung (30) übertragen werden.

8. Verfahren nach einem der vorherigen Ansprüche, wobei zum Vermessen ein Messtaster (40) verwendet wird.

9. Verfahren nach einem der vorherigen Ansprüche, wobei zum Vermessen ein Scanner (51), insbesondere ein Handscanner, verwendet wird.

10. Verfahren nach einem der vorherigen Ansprüche, wobei die gemessenen Geometriedaten der numerischen Steuerung (30) in Form eines Konturzugs bereitgestellt werden.

11. Numerische Steuerung zur Durchführung eines Verfahrens nach einem der Ansprüche 1 bis 10 mit einer Kollisionserkennungseinrichtung (34) zum Erkennen und Verhindern von Kollisionen, wobei in die Kollisionserkennung gemessenen Geometriedaten eines Werkzeughalters (2) und/oder eines Werkzeugadapters (3) und/oder einer Werkzeugverlängerung und/oder eines Komplettwerkzeuges (50) mit einbeziehbar sind.

12. Werkzeugmaschine (20) mit einer numerischen Steuerung (30) nach Anspruch 11.
